# EUROPEAN PATENT SPECIFICATION

(11) **EP 2 579 159 B1**
(45) Date of publication and mention of the grant of the patent: **06.05.2015**
(21) Application number: 10852154.3
(22) Date of filing: 27.05.2010
(51) Int. Cl.: G06F 12/06, G06F 12/00, G06F 13/16, G06F 12/02

(54) **MEMORY SYSTEM, MEMORY DEVICE, AND MEMORY INTERFACE DEVICE**
SPEICHERSYSTEM, SPEICHERVORRICHTUNG UND SPEICHERSCHNITTSTELLENVORRICHTUNG
SYSTÈME DE MÉMOIRE, DISPOSITIF DE MÉMOIRE, ET DISPOSITIF D'INTERFACE DE MÉMOIRE

(43) Date of publication of application: 10.04.2013
(73) Proprietor: Fujitsu Limited, Kawasaki-shi, Kanagawa 211-8588 (JP)
(72) Inventor: NISHIO Masahiro, Kawasaki-shi, Kanagawa 211-8588 (JP)
(74) Representative: Hoffmann Eitle
(86) International application number: PCT/JP2010/058973
(87) International publication number: WO 2011/148484

(56) References cited:
- JP-A- 2000 339 070
- JP-A- 2010 039 645
- US-A1- 2005 044 302
- US-A1- 2006 198 178

## Description

The embodiments discussed herein are related to memory system, a memory device and a memory interface device.

### BACKGROUND

A high speed and large-capacity memory system is effective to improve a speed and processing ability of the information processing apparatus. For example, with the rapid adoption of virtualization of server system, a capacity of a memory which is equipped with existing server system is insufficient.

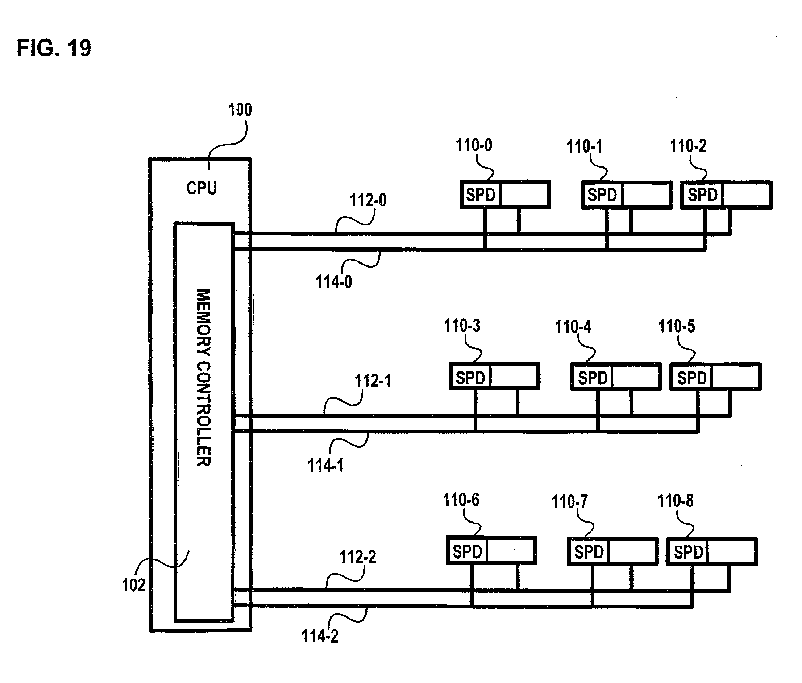

FIG. 19 is a block diagram of a conventional memory system. A CPU (Central Processing Unit) 100 includes a memory controller 102. The memory controller 102 includes three memory buses 112-0 ∼ 112-2. Three memory modules 110-0 ∼ 110-2, 110-3 ∼ 110-5 and 110-6 ∼110-8 are connected to each of the memory buses 112-0 ∼ 112-2 via slots. In a high-speed transmission system of the memory, such as DDR (Double Data Rate) 2/DDR 3, it is a limit that single memory bus connects two or three pieces of memory modules to the memory slot.

In addition, in order that the memory controller 102 performs to obtain the status and to set the status, etc. of each of the memory modules 110-0 ∼ 110-2, 110-3 ∼ 110-5, and 110-6 ∼ 110-8, the memory controller 102 connects to the three pieces of the memory modules 110-0 ∼ 110-2, 110-3 ∼ 110-5, and 110-6 ∼ 110-8 through three serial buses 114-0 ∼ 114-2. The serial buses 114-0 ∼ 114-2 are used a lower transmission speed bus compared to the memory bus. For example, I2C (Inter-Integrated Circuit) communication bus is used. In the I2C communication bus, a 3-bit identification is possible, and single I2C communication bus can connect up to eight memory modules.

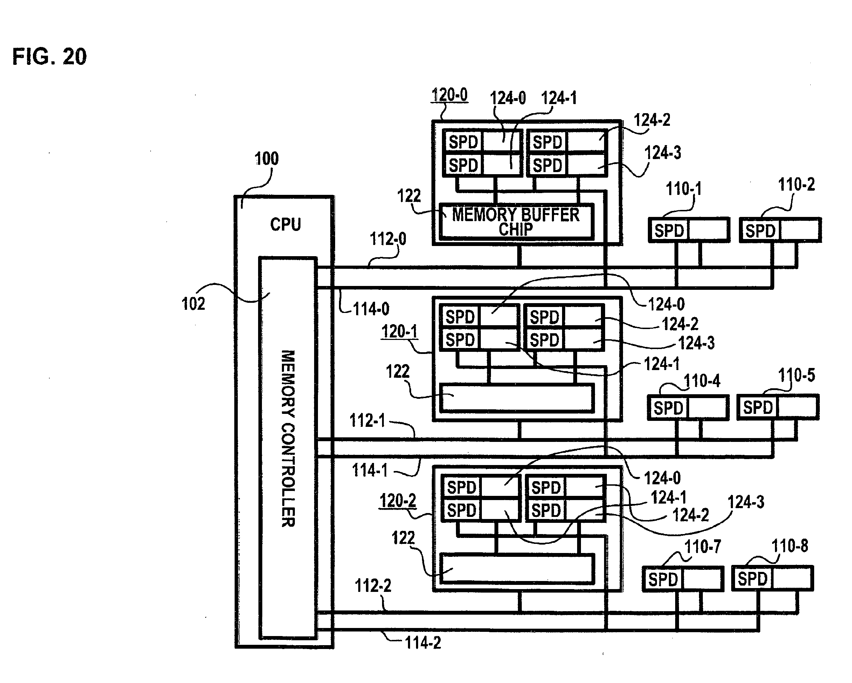

FIG. 20 is a block diagram of memory system according to another prior art. In FIG. 20, the number of memory bus 112-0 ∼ 112-2, the number of serial bus 114-0 ∼ 114-2 and the number of the memory slot are the same as the conventional system in FIG. 19. In FIG. 20, riser boards 120-0 ∼ 120-2 are connected to the memory slot of the existing system.

The riser boards 120-0 ∼ 120-2 mounts on a memory buffer chip 122 for expansion memory and a plurality of memory modules 124-0 ∼ 124-3. In this example, single memory slot is extended to the four memory slots by the riser boards 124-0 ∼ 124-3. SPD (Serial Presence Detect) memories of each memory module are connected directly to the serial bus 114-0 ∼ 114-2. In addition, a RAM (Random Access Memory) of each memory modules 124-0 ∼ 124-3 is connected to the memory bus 112-0 ∼ 112-2 through the buffer memory chip 122. That is, it is possible to extend to four times of the memory capacity.

On the other hand, when power is applied to the computer system, a start-up process of the operating system (OS: Operating System), which is called as boot process, is started. The start-up process includes an initialization and a diagnostics of various hardware and incorporation of various hardware in a computer system by firmware such as BIOS (Basic Input Output System) and the OS.

The BIOS executes the initialization process of the memory through the serial buses 114-0 ∼ 114-2. In the initialization process, the BIOS reads specification information (hereinafter referred to as the SPD data) of the memory module which stored in a nonvolatile memory (hereinafter referred to as SPD (Serial Presence Detect) memory) mounted on the memory module, and the BIOS determines the operating speed, latency and an access timing of the memory module. Further, the BIOS performs setting of the operation of the memory controller and the initialization process of RAM (Random Access Memory) that is installed in the memory module based on the determined information.

In such a memory system, there is a possibility that system failure occurs due to erroneous mounting of the memory module because the load on the BIOS for performing memory initialization process makes heavy with increasing memory. In order to reduce the burden of memory initialization of the BIOS, it is proposed to provide a memory initialization control device, which collects the SPD data and checks the error with mounting of the memory in place of the BIOS, separately from the memory module.

### [Prior art documents]

Patent Document 1: Japanese Laid-open Patent Publication No. 2006-018487 Patent application US 2005/044302 A1 describes a memory module includes a printed circuit board and a plurality of memory devices arranged in a plurality of ranks on the printed circuit board. The plurality of ranks includes a first subset having at least one rank and a second subset having at least one rank. The memory module further includes a first serial-presence-detect (SPD) device on the printed circuit board and a second SPD device on the printed circuit board. The first SPD device includes data that characterizes the first subset. The second SPD device includes data that characterizes the second subset.

Patent application US 2006/198178 A1 describes a method of forming a stacked memory module from a plurality of memory devices is provided. Each of the plurality of memory devices is modified to include a logic block for decoding a plurality of chip select signals. A first high density memory module is also provided that includes the modified memory devices and a serial presence detect device. The first high density memory module is included within an electronic system. Also, an additional method of forming a stacked memory module is provided, the method requiring modification of an address buffer to include a logic block for decoding a plurality of chip select signals. A second high density memory module is also provided that includes the modified address buffer and a serial presence detect device. The second high density memory module is included within an electronic system.

### SUMMARY OF THE INVENTION

### PROBLEM TO BE SOLVED BY THE INVENTION

As indicated as FIG. 20, because the SPD memory in the memory modules 124-0 ∼ 124-3 of the riser board 120-0 ∼ 120-2 connect directly to the serial bus 114-0 ∼ 114-2, the bus connection number of the SPD memory has become a bottleneck, so the number of additional riser will be limited. For example, when using the 12C communication bus described above as a serial bus, the maximum number of connections of the SPD memory of the memory module bus is eight per single serial bus.

In FIG.20, because the number of connections of the SPD memory for each one serial bus is six and less than eight, there is no problem. However, if two risers 120-0 are added to single serial bus, since it exceeds the maximum number of connections, it is not possible to add more risers. For this reason, there is a limit to the expansion of memory.

The purpose of the present invention is to provide a memory system, a memory device and a memory interface device to increase the mounting number of memory device equipped with a plurality of memory modules.

### MEANS FOR SOLVING THE PROBLEM

According to an aspect of the embodiments, a memory system includes a plurality of memory circuits having a volatile memory and a non-volatile memory that stores specification information of input and output data of the volatile memory, a memory device having a memory interface circuit that is connected to the non-volatile memory in the plurality of memory circuits and a processing unit having a memory controller that controls data input and output of the volatile memory through a memory bus. And the memory interface circuit has a processing circuit that reads specification information of the non-volatile memory in the plurality of memory circuits through the control bus and determines whether or not the plurality of memory circuits satisfy requirements of memory expansion from the specification information of the plurality of memory circuits and a storage unit that is connected to processing unit through the control bus and stores a determination result of the processing circuit, and the processing unit reads the information stored from the storage unit through the control bus and executes an initialization process of the memory controller.

According to an aspect of the embodiments, a memory device includes a plurality of memory circuits having a volatile memory and a non-volatile memory that stores specification information of input and output data of the volatile memory, a memory interface circuit that is connected to a processing unit, that controls an input and output of data in the volatile memory through memory bus, via control bus and connected to the non-volatile memory in the plurality of memory circuits through the control bus. And the memory interface circuit has a processing circuit that reads specification information of the non-volatile memory in the plurality of memory circuits through the control bus and determines whether or not the plurality of memory circuits satisfy requirements of memory expansion from the specification information of the plurality of memory circuits and a storage unit that is connected to processing unit through the control bus and stores a determination result of the processing circuit for executing an initialization process by the processing unit.

According to an aspect of the embodiments, a memory interface device is connected to each of non-volatile memory in a plurality of memory circuits having a volatile memory and a non-volatile memory that stores specification information of input and output data of the volatile memory and is connected to a processing unit, that controls an input and output of data in the volatile memory through memory bus, via control bus. The memory interface circuit has a processing circuit that reads specification information of the non-volatile memory in the plurality of memory circuits through the control bus and determines whether or not the plurality of memory circuits satisfy requirements of memory expansion from the specification information of the plurality of memory circuits and a storage unit that is connected to processing unit through the control bus and stores a determination result of the processing circuit for executing an initialization process by the processing unit.

### EFFECT OF THE INVENTION

Since the bus memory interface circuit, which collects specific information for the plurality of memory circuits, creates a common specification information and stores the information, is connected to the control bus of the processing unit, it is possible to increase the connection number of memory of the memory bus. Also, it is possible to shorten the initialization process of the processing unit even though increasing the memory to the memory bus.

### BRIEF DESCRIPTION OF DRAWINGS

FIG.1 is an overall block diagram of a memory system according to one embodiment;
FIG.2 Is a partial block diagram of the memory system in FIG. 1;
FIG.3 is a block diagram of a virtual SPD memory according to the embodiment;
FIG. 4 is a flow chart of initialization process of BIOS according to the embodiment;
FIG. 5 is an explanatory diagram of checking the integrity of the SPD data and the data held in the SPD memory in the memory modules;
FIG. 6 is an explanatory diagram of the conversion process of the memory expansion and the data held in the SPD memory in the memory modules;
FIG. 7 is an explanatory diagram of the process of expansion converting of SDRAM capacity/ bank address width in byte 4 in FIG. 6;
FIG. 8 is an explanatory diagram of a row/column address width in byte 5 in FIG. 6;
FIG. 9 is a diagram illustrating the relationship between DRAM capacity and SPD settings;
FIG. 10 is a flow chart of conversion process of row / column address executed by SPD data memory expansion unit;
FIG.11 is an explanatory diagram of the conversion process of the number od module rank and bit width of SDRAM in byte 7 in FIG. 6;
FIG. 12 is an explanatory diagram of the conversion process of minimum RAS to RAS delay time (tRRDmin) in byte 19 in FIG.6;
FIG. 13 is an explanatory diagram of the process of recalculating the CRC code of SPD in bytes 126-127 in FIG. 6;
FIG. 14 is a block diagram of a memory system according to a second embodiment;
FIG. 15 is a block diagram of a memory system according to a third embodiment;
FIG. 16 is a block diagram of a memory system according to a fourth embodiment;
FIG. 17 is a block diagram of a memory system according to a fifth embodiment;
FIG. 18 is a block diagram of a memory system according to a sixth embodiment;
FIG. 19 is an explanatory diagram of a conventional memory system;
FIG. 20 is an explanatory diagram of another conventional memory system.

### EMBODIMENTS TO REALIZE THE INVENTION

Hereinafter, embodiments will be described in the order of the first embodiment of the memory system, a virtual SPD memory, a process of match and expansion conversion of memory and the other embodiments of the memory system, but the disclosed memory system, the memory device, the memory interface device are not limited to these embodiments.

### (First embodiment of the memory system)

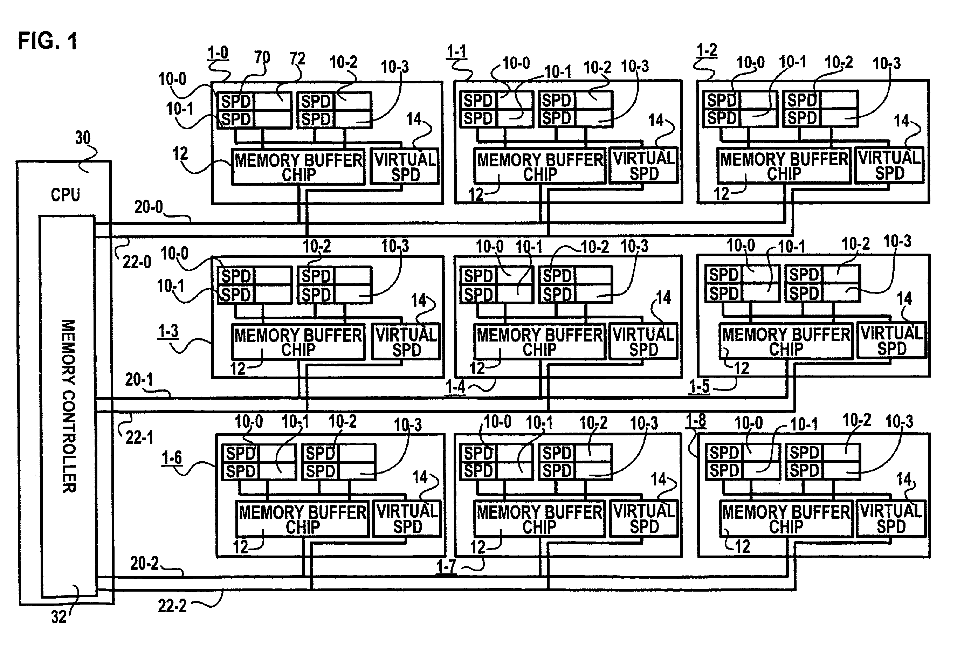

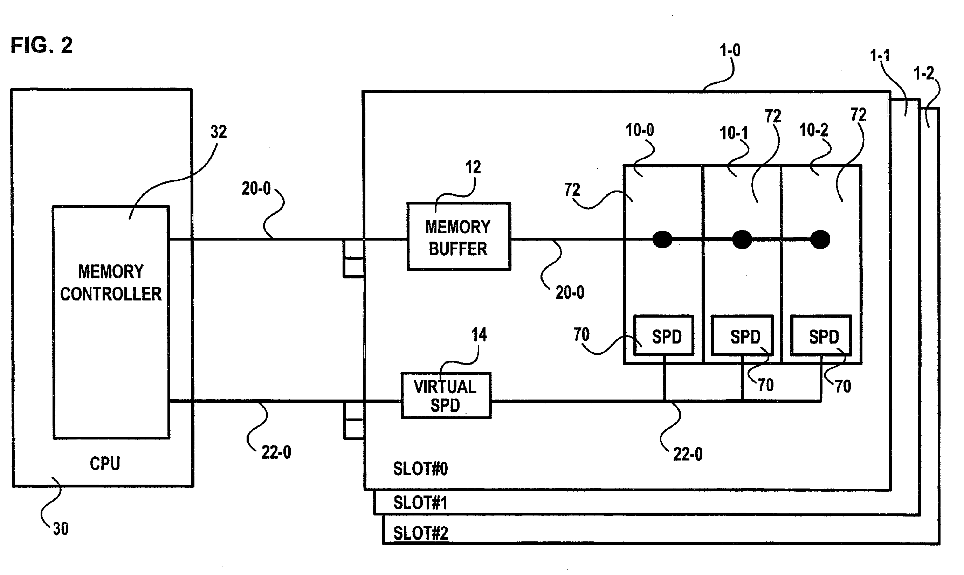

FIG. 1 is an overall block diagram of a memory system according to one embodiment. FIG. 2 is a partial block diagram of the memory system in FIG. 1. As illustrated in FIG. 1, CPU (Central Processing Unit) 30 includes an arithmetic processing unit (not illustrated in FIG. 1) and a memory controller 32. The memory controller 32 includes a plurality of memory bus 20-0 ∼ 20-2 and a plurality of serial bus 22-0 ∼ 22-2. The example indicates three memory bus 20-0 ∼ 20-2 and three serial bus 22-0 ∼ 22-2 but the number of bus is not limited to the number in the example.

And the memory bus 20-0 ∼ 20-2 are constituted by high-speed memory transmission system of DDR (Double Data Rate) 2 specification 2/DDR3 specification. The serial bus 22-0 ∼ 22-2 are used bus of slow transmission speed compared with the memory bus. For example, I2C (Inter-Integrated Circuit) communication bus is used. The I2C communication bus is able 3-bit identification, and single I2C communication bus can connect up to eight memory modules.

Each of riser boards 1-0 ∼ 1-2, 1-3 ∼ 1-5 and 1-6 ∼1-8 is connected to three memory slots which are connected to the memory bus 20-0 ∼ 20-2 and the serial bus 22-0 ∼ 22-2.

Each of riser boards 1-0 ∼ 1-8 includes a memory buffer chip 12 for memory expansion, a plurality of memory modules 10-0 ∼ 10-3 and a memory interface circuit (referred to as virtual SPD memory) 14. Each of memory modules 10-0 ∼ 10-3 has a nonvolatile memory 70 (referred as SPD in FIG.1) which stores specification information (called to as SPD data: Serial Presence Detect Data) of the memory and a random access memory (RAM: Random Access Memory) 72.

In the example of FIG.1, the riser boards 1-0 ∼ 1-8 mounts four memory modules 10-0 ∼ 10-3, so single memory slot may be extended to four memory slots by mounting the riser boards. The virtual SPD memory 14 is connected to the serial bus 22-0 ∼ 22-2 and is connected to the nonvolatile memory (hereinafter referred to as SPD memory) 70 in each memory module 10-0 ∼ 10-3. Further, the RAM 72 in each memory module 10-0 ∼ 10-3 is connected to the memory bus 20-0 ∼ 20-2 through the buffer memory chip 12.

The example of FIG. 1 illustrates a system in which the riser boards are mounted on all memory slots, but the riser may be equipped to a part of the memory slot, and it is possible to change the number of installed riser boards depending on the amount of memory required. Although the example illustrates that the number of memory modules which are mounted on single riser board is four, but the number of memory modules may be multiple.

When targeting single memory bus 20-0 and single serial bus 22-0 in the entire memory system of FIG.1, a structure is illustrated by FIG.2. That is, the riser boards 1-0 ∼ 1-2 connect to the memory controller 32 in the CPU 30 through the memory bus 20-0 and the serial bus 22-0. Each of riser boards 1-0 ∼ 1-2 includes the memory buffer chip 12, the plurality of memory modules 10-0 ∼ 10-2, and the virtual SPD memory 14. The memory buffer chip 12 connects to the memory controller 32 and the RAM 72 in each of memory modules 10-0 ∼ 10-2 by the memory bus 20.

The virtual SPD memory 14 connects to the memory controller 32 and the SPD memory 70 in each of memory modules 10-0 ∼ 10-2 by the serial bus 22-0. The SPD memory 70 is a nonvolatile memory which stores specification information (called to as SPD data: Serial Presence Detect Data) as described later. In addition, FIG.2 illustrates the example in which each of the riser boards 1-0 ∼ 1-2 mount three memory modules 10-0 ∼ 10-2. However, as indicated by in FIG. 1, it is possible to mount four memory modules 10-0 ∼ 10-3 on each of the riser boards 10-0 to 10-3.

As described below, the virtual SPD memory 14 collects the SPD data of the memory modules 10-0 ∼ 10-3 in the riser board, performs an integrity check of the data, executes conversion of memory expansion and stores expansion converted SPD data. That is, the virtual SPD memory 14 stores the SPD data which is an aggregated data of the SPD data in the SPD memory of four memory modules 10-0 ∼ 10-3 in the riser board.

Therefore, it is possible that the memory controller 32 recognizes a plurality of memory modules in the riser as if they were a single memory module. In other words, it is possible to extend the number of memory modules in spite of the limit on the number of connections of the serial bus 22-0. In addition, it is possible that the memory controller 32 omits the initialization process of the individual memory module in the riser board. Therefore, it is possible to reduce the load of the BIOS even though increasing the number of memory modules.

### (Virtual SPD memory)

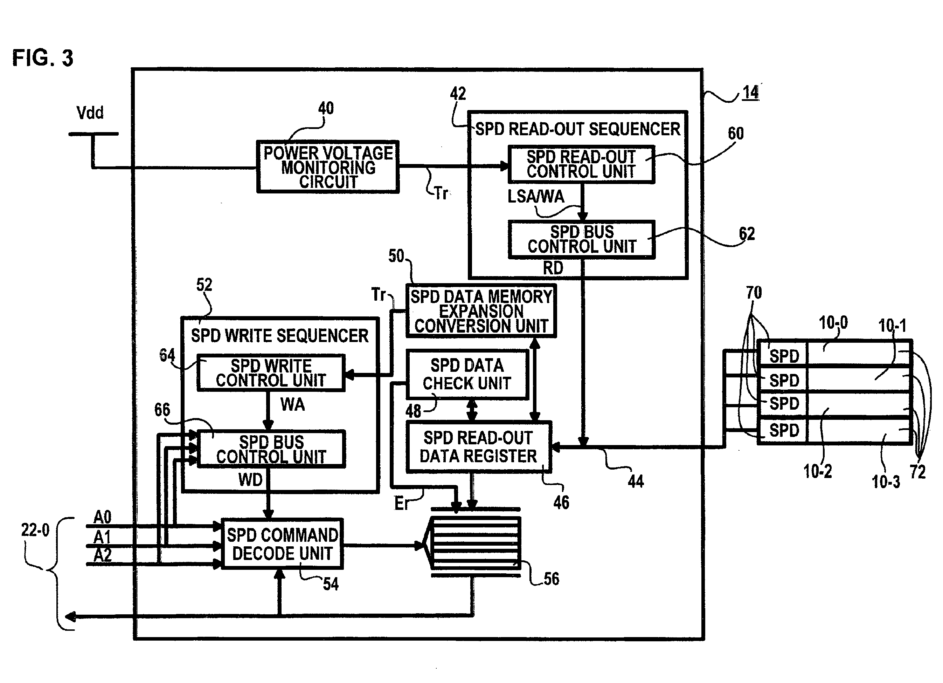

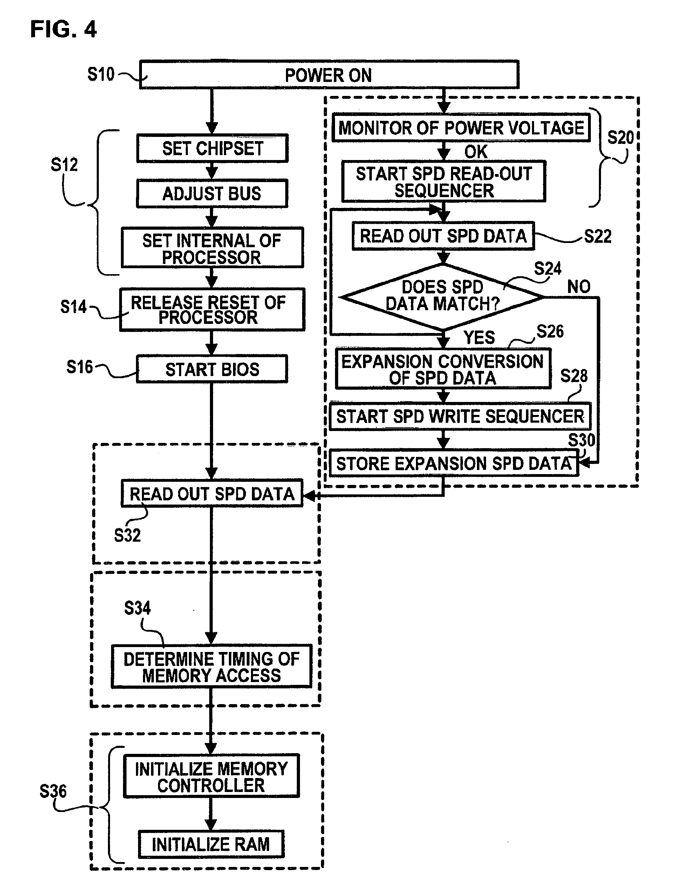

FIG. 3 is a block diagram of the virtual SPD memory according to the embodiment. FIG. 4 is a flow diagram of initialization process by the BIOS according to the embodiment. In FIG. 3, elements which are the same as elements illustrated in FIG. 1 and FIG. 2 are indicated by the same symbols.

As depicted by FIG. 3, the virtual SPD memory 14 includes a power supply voltage monitoring circuit 40, a SPD readout sequencer 42, a local SPD bus (serial bus) 44, a SPD readout register 46, a SPD data checking unit 48, a SPD data memory expansion conversion unit 50, a SPD write sequencer 52, a SPD command decode unit 54 and a SPD data storage unit 56.

The SPD readout sequencer 42 reads the SPD data in the SPD memory 70 of the memory modules 10-0 ∼ 10-3 to the SPD readout register 46 via the local SPD bus 44 of the same configuration as the serial bus 22-0. The SPD data check unit 48 judges whether or not the SPD data of each memory modules 10-0 ∼ 10-3 which were readout to the SPD readout register 46 are matched.

The SPD data memory expansion and conversion unit 50 performs the conversion of memory expansion such as address bit width from the SPD data of each of memory modules 10-0 ∼ 10-3 that have been read to the SPD readout register 46. The SPD write sequencer 52 writes data in the SPD readout register 46 into the SPD data storage unit 56 via the SPD command decode unit 54. In addition, the SPD command decode unit 54 connects to the serial bus 22-0 and performs a read access to the SPD data storage unit 56 and sends the data in the SPD data storage unit 56 to the serial bus 22, when receiving a slave address from the memory controller 32.

In addition, the SPD readout sequencer 42 has a SPD readout control unit 60 and a SPD bus control unit 62. The SPD readout control unit 60 issues local slave address LSA and word address WA of the memory modules 10-0 ∼ 10-3 to the SPD bus control unit 62, in response to a trigger signal Tr from the supply voltage monitoring circuit 40. The SPD bus control unit 62 sends read command RD including the local slave address LSA and the word address Wa which were issued to the SPD memory 70 of memory modules 10-0 ∼ 10-3 via the local bus 44.

The SPD write sequencer 52 has a SPD write control unit 64 and a SPD bus control 66. The SPD write control unit 64 issues a word address WA of the SPD data storage unit 66 to the SPD bus control unit 62, depending on the trigger signal Tr from the SPD data memory expansion and conversion unit 50. The SPD bus control unit 66 transmits a write command WD including the word address WA which was issued to the SPD command decode unit 54.

Next, referring to FIG. 4, the operation of virtual SPD memory 14 in FIG. 3 will be explained. When inputting power of the system, the power supply voltage monitoring circuit 40 operates and checks the power supply voltage value. When the power supply voltage value is a normal value within a standard, the power supply voltage monitoring circuit 40 outputs a trigger signal Tr to the SPD readout sequencer 42.

When the SPD readout sequencer 42 receives the trigger signal Tr, the SPD readout sequencer 42 starts collection of actual SPD data in the plurality of memory modules 10-0 ∼10-3 under the control of the memory buffer chip 12 (referring to FIG. 1 and FIG. 2). In other words, the SPD readout control unit 60 in the SPD readout sequencer 42 generates a local SPD slave address LSA and a SPD word address WA. The local SPD slave address is a signal to select the real SPD memory device 70 on the riser board 1-0 (1-1 ∼ 1-8). The SPD word address WA is a signal indicating the storage address of the SPD data in the SPD memory device 70 which was selected.

The SPD bus control unit 62 receives the local SPD slave address LSA and the SPD word address WA from the SPD readout control unit 60, generates a SPD read command RD, and sends the command to the local SPD bus 44. Thereby, the SPD data in the specified SPD memory device 70 is read and sequentially stored in the SPD readout data register 46 via the local SPD bus 44. The SPD readout sequencer 42 repeats this process and collects all SPD data in all SPD memory 70 into the SPD readout data register 46 (referring to step S20 in FIG. 4).

After the SPD data collected is temporarily stored in the SPD readout data register 46, the SPD data check unit 48 checks the integrity of the data. The integrity check is to check whether or not the memory modules 10-0 ∼ 10-3 under the control of the memory buffer chip 12 meet the requirements for memory expansion.

There are two type of integrity checks, that is, one is to judge matching and another is to calculate common timing. In matching judgment, checking is performed whether the memory capacity is same and whether the operation speed aligned. In calculation of the common timing, checking is performed whether there is variation in the timing characteristics and performed data processing to absorb the variation when there is the variation (referring to step S22, S24 in FIG. 4).

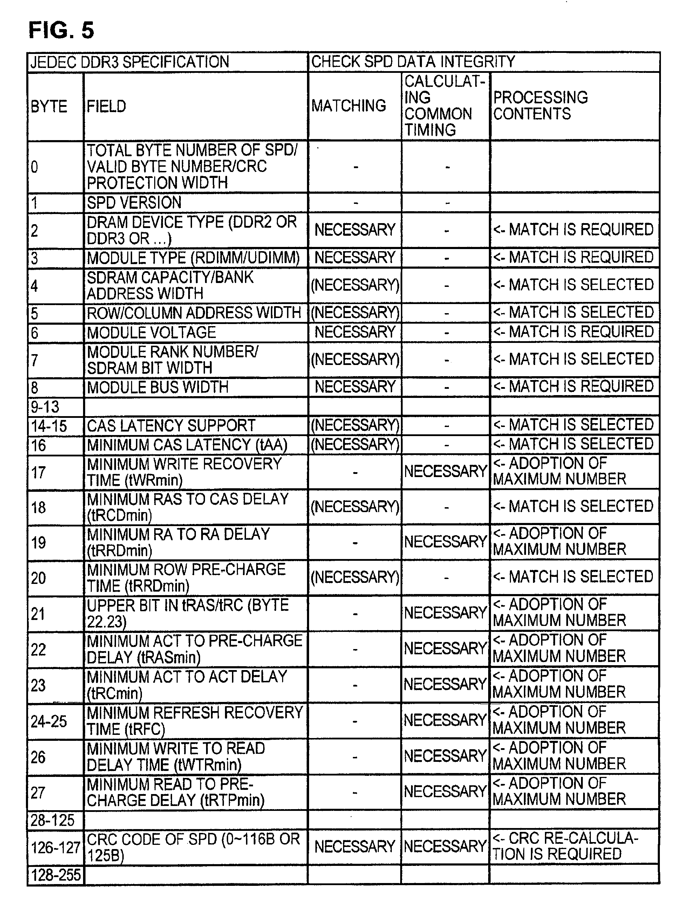

As described below in FIG. 5, item of matching judgment is divided into two fields which include match required and match selection. The field of match required is a field in which match is required regardless of the memory expansion method. In addition, a field of match selection is a field in which match is not necessarily need depending on memory expansion scheme. Basically, the specification of each memory modules 10-0 ∼ 10-3 on the riser board 1-0 is all the same. However, there is no problem case when the memory capacity and the operating speed do not match, in some extension method of the memory buffer chip 12, so the item of match are classified into two matching items.

Therefore, it is preferable that matching judgment logic in the SPD data check unit 48 implements the programmable PLD (Programable Logic Device), or to have multiple modes. This allows flexibility in each expansion method.

In addition, as described in FIG. 5, when there is variation in the timing characteristics of the memory modules 10-0 to 10-3 each other, the item of common timing calculation adopts a maximum value of the timing between each memory modules. The reason is to absorb the variations in the timing characteristics in the riser board 1-0 by adjust the timing value of the memory module in which the timing value is most slow.

When there is a problem with the integrity check by the matching determination of the SPD data, that is, when a memory module that does not meet the requirements for memory expansion is mounted on the riser board 1-0 in error, the SPD data check unit 48 logs the result of the check error as an error log to the reserved bit in the SPD data storage unit 56 (referring to step S30 in FIG.4). The BIOS can detect the erroneous implementation of the memory module by reading the log bit of the SPD data storage unit 56.

On the other hand, the SPD data check unit 48, when calculating the maximum value as a common timing, updates corresponding entry fields in the SPD data storage unit 56 to the maximum value.

When the SPD data check unit 46 determines that there is no problem with the integrity of the match by judging of match in the SPD data, the SPD data memory expansion conversion unit 50 expands and converts the SPD data (referring to step S26 in FIG.4). The process of memory expansion conversion is a SPD data process such as expansion of the address bit width in order to increase the capacity of the memory to twice, four times, eight times,,,.

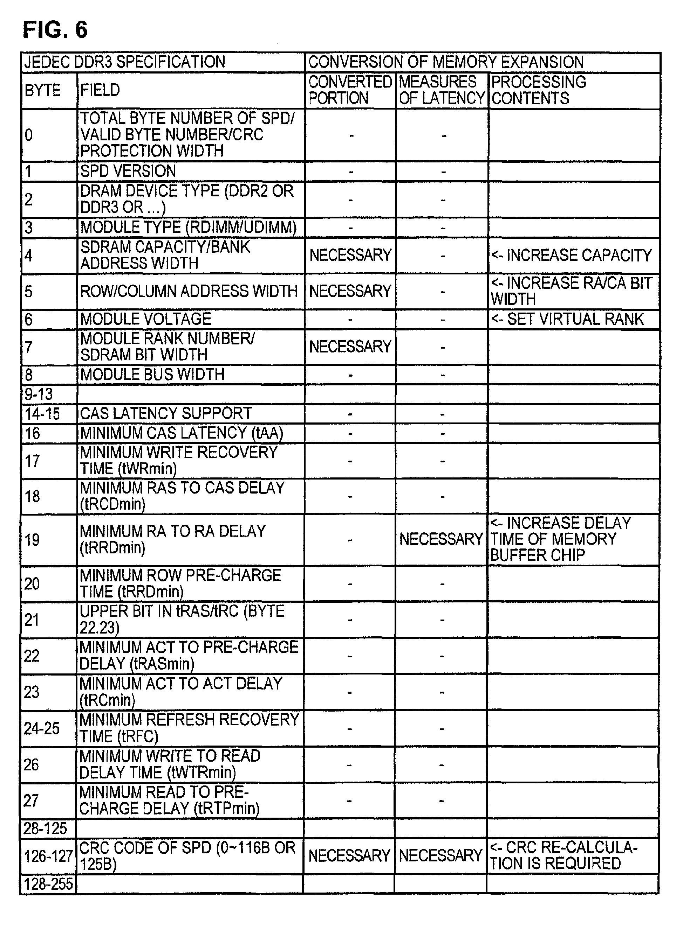

As will be described below in FIG. 6, the memory expansion conversion unit 50 extends the row address width of the memory module up to a maximum value priority, and extends the width of the column address when it is not enough by only the extension of row address. This memory expansion conversion unit 50 may be implemented by hard-wired fixed. However, it is preferable that the memory expansion conversion unit 50 implements the programmable PLD, or to have multiple modes. This allows flexibility in each expansion method.

When the memory expansion conversion unit 50 has completed all expansion conversion processes, the memory expansion conversion unit 50 rewrites the converted value to the corresponding field in the SPD readout data register 46. And memory expansion conversion unit 50 outputs a trigger signal Tr to the SPD write sequencer 52. When the SPD write sequencer 52 receives the trigger signal Tr, the SPD write sequencer 52 writes the SPD data (as indicated by FiG. 5 and FIG. 6), which is stored and updated into the SPD readout data register 46, into the SPD data storage unit 56.

That is, the SPD write control unit 64 in the SPD write sequencer 52 generates a SPD word address WA of the SPD data storage unit 56. The SPD bus control unit 66 receives the SPD word address WA from the SPD write control unit 64, generates a SPD write command WT, and transmits the write command to the SPD command decode unit 54 (referring to step S28 in FIG. 4).

The SPD command decode unit 54 decodes the SPD write command and writes the data in the SPD readout register 46 which is specified by the word address into the SPD data storage unit 56. The SPD write sequencer 52 repeats this process and creates one virtual SPD memory in the SPD data storage unit 56.

The SPD data storage unit 56 is provided with a same address map and same data format as the real SPD memory 70. Thus, it is possible that the BIOS accesses the virtual SPD memory unit 56 through the serial bus 22-0 in the same way as the actual SPD memory 70. That is, without having to change the BIOS, the memory expansion is possible.

Next, the process of the virtual SPD memory and the BIOS will be explained according to FIG. 4.
(S10) In response to the power-on, the boot process for start-up of the OS in the CPU30 starts. In addition, the creation process of the virtual SPD memory by the virtual SPD memory 14 described above is started.
(S12) In the boot process of the CPU30, the settings of the chip sets of the CPU 30 and the peripheral circuits including the memory system are performed. Then, the boot process performs adjustments of the bus. And then, the boot process performs the internal settings of the processor in the CPU30.
(S14) When the boot process in step S12 is successful, a reset of the processor is released.
(S16) When releasing the reset of the processor, the processor starts the BIOS.
(S32) The BIOS executed by the CPU30 reads the SPD data in the SPD data storage unit 56 of the SPD virtual memory 14 in the riser board 1-0 (1-1 to 1-8) through the serial bus 22-0. As described in the steps S20 ∼ S30, when the SPD virtual memory 14 detected the power-on, the SPD virtual memory 14 has executed the initialization process of the memory modules 11-0 ∼ 11-3 in the riser board 1-0 (1-1 ∼ 1-8) and stored a result of the process in the SPD data storage unit 56.

Accordingly, the BIOS can performs memory recognition process of the SPD data of the memory modules 10-0 ∼ 10-3 in the riser board 1-0 (1-1 to 1-8) by once reading. Therefore, it is possible to reduce the load of the BIOS for the recognition process of the memory. In other words, it is possible to reduce the initialization time of the BIOS. Of course, when equipped with a mixed the riser board and the memory module (referring to FIG. 19 and FIG. 20) which is not constructed by the riser board into the memory slots, the BIOS reads the SPD data from the memory module which is not constructed by the riser board. The BIOS repeats the memory recognition process for the number of cards of all the riser boards (and/or the memory modules) which are installed.
(S34) Next, the BIOS performs SPD data processing. The BIOS determines the operating speed, latency, and access timing of the memory modules in the riser board, based on the SPD data read from the virtual SPD memory 14 in each of the riser boards. In this case, since the determination of the access timing in the riser board is terminated, the BIOS determines only access timing between the riser boards.

Therefore, because the BIOS do not need to perform the extended conversion of the SPD data, it is possible to reduce the processing load of the SPD data in the BIOS. In other words, it is possible to reduce the initialization time of the BIOS.
(S36) The BIOS performs an operating setting of the memory controller 32 and initialization processing of the RAM72 which is mounted on the memory module based on the determined information.

### (Matching and expansion/conversion process of the memory)

Next, the matching and expansion/conversion process as described above will be explained in detail. FIG. 5 is an explanatory diagram of the stored data in the SPD memory 70 of the memory modules 10-0 ∼ 10-3 and contents of the SPD data integrity checks. That is, FIG. 5 is a diagram illustrating relationship between the byte position and the field contents of the SPD memory in the memory module of the DDR 3 specification and targets of the SPD data integrity checks. Note that in FIG. 5, the data of the SPD data in which the integrity check is not required are indicated by a blank.

As illustrated as FIG. 5, the SPD data is specification information of the memory module such as a type, a capacity, a maximum operating speed, a support latency and a timing characteristics of the memory module. FIG. 5 illustrates an example of the SPD data in DDR3 specification. In the DDR3 specification, the SPD data has a field of 0∼255 bytes.

For example, byte 0 defines total byte number of the SPD data/ number of valid bytes/ CRC (Cyclic Redundancy Code) protection width. In addition, byte 1 defines the version number of the SPD. SPD data item of determined target which is required aforementioned match is indicated by "necessary" in FIG. 5.

In other words, the SPD data items of the target to be required match determination are the DRAM device type in byte 2, the module type in byte 3, a module voltage in byte 6, module bus width in 8 byte, the CRC code of the SPD in bytes 126-127.

The DRAM (Dynamic Random Access Memory) device type in the byte 2, specifies whether the memory module is DDR2 specification or DDR 3 specification or other specification. The module type in the byte 3 specifies whether the type of memory module is a RDIMM (Registered Dual Inline Memory Module) or a UDIMM (Unbuffered Dual Inline Memory Module). The module voltage in byte 6 defines as the value of the operating voltage of the memory module. The module bus width in byte 8 defines the bus width of the memory module. The CRC code of the SPD in bytes 126-127 defines as CRC code value of the SPC data (CRC value of 0 ∼ 116 bytes or CRC value of 0 ∼ 125 bytes).

If these SPD data do not match with each of the memory modules, the memory modules becomes inoperable. The SPD data check unit 48 as described above compares whether the SPD data items match between each of the memory modules and determines the match. When the SPD data check unit 48 detects an item that do not match, the SPD data check unit 48 logs an error as an incorrect implementation as described above.

In addition, the SPD data item of the judgment item which is selected matching is indicated as "[necessary]" in FIG. 5. In other words, the items of SPD data of judgment items in which the match is selected, the SDRAM capacity/bank address width in byte 4, raw address/column address width in byte 5, the number of module rank/bit width of SDRAM in byte 7, minimum cycle of SDRAM in byte 12, CAS (Column Address Strobe) latency support in bytes 14-15, minimum CAS latency (tAA) in byte 16, minimum RAS (Row Address Strobe) to CAS delay (tRCDmin) in byte 18, and minimum pre-charge time (tRPmin) in byte 20.

These items in which the match are selected are selected due to characteristics of the buffer memory 12 or when performing the operation of simultaneously read (called to Lockstep) of the memory modules and the operation of duplex. For example, it is necessary that memory modules which become a pair are same specification.

On the other hand, the SPD data items that are used to calculate the common timing in the integrity check are indicated by "necessary" in column of common timing calculation in FIG.5. In other words, the SPD data items used to calculate the common timing are a minimum write recovery time in byte 17, a minimum RA (Row Address) to RA Delay (tRRDmin) in byte 19, an upper bit of tRAS/ tRC (byte 22, 23) in byte 21, a minimum ACT (Bank Active) to pre-charge delay (tRAmin) in byte 22, a minimum ACT to ACT delay (tRCmin) in byte 23, a minimum refresh recovery time (tRFC) in bytes 24-25, a minimum write to read delay time (tWTRmin) in byte 26, a minimum read to pre-charge delay (tRTPmin) in byte 27, and the CRC code of the SPC in bytes 126-127.

In these specification regarding to the timing and the speed of the memory module, there is some deviation width of the timing characteristics between the memory modules of same speed specification due to variations of the semiconductor. In order to absorb the deviation width, the common timing calculation compares the timing characteristics of the individual memory modules, and calculates the timing specification which is valid for all memory modules. In this example, as described in the processing content of FIG. 5, the SPD data check unit 48 selects the maximum value of the target SPD data and updates the corresponding field of the SPD data storage unit 56 by the selected value.

FIG. 6 is an explanatory diagram of data held in the SPD memory 70 of the memory modules 10-0 ∼ 10-3 and conversion process of memory expansion. That is, FIG. 6 illustrates the byte position and the field contents of the SPD memory in the memory module of the DDR 3 specification as same as FIG.5 and illustrates changing portions, latency measure items and processing contents of conversion for memory expansion in each field contents. Note that in FIG. 6, the data of the SPD data in which the integrity check is not required are indicated by a blank, as same as FIG.5.

In FIG.6, conversion items are indicated by "necessary" in column of the conversion items. That is, the conversion items are SDRAM capacity/bank address width in byte 4, row/column address width in byte 5, the number of module rank/SDRAM bit width in byte 7 and a CRC code of the SPD in bytes 126-127.

Similarly, the latency measure items are indicated by "necessary" in column of the latency measure items in FIG.6. That is, the latency measure items are minimum RA to RA delay time (tRRDmin) in byte 19 and a CRC code of the SPD data in bytes 126-127.

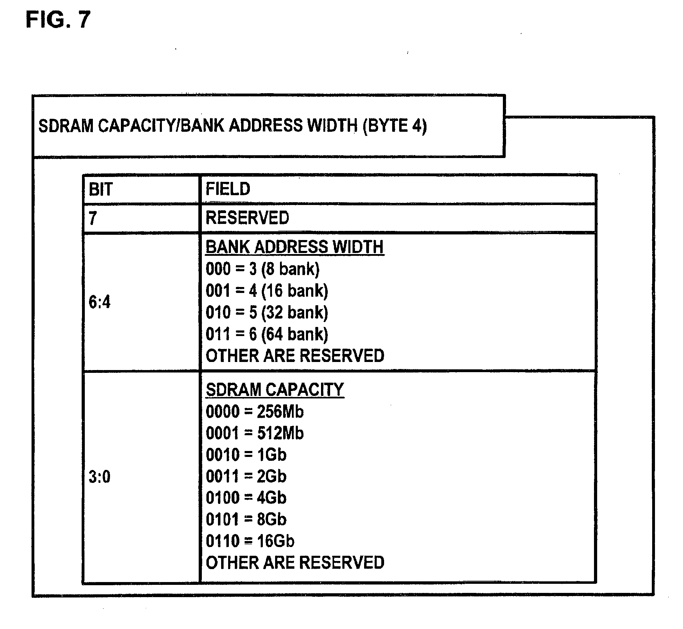

FIG. 7 is an explanatory diagram of a conversion process of the SDRAM capacity/bank address width in byte 4 in FIG. 6. The SDRAM capacity/bank address width in byte 4 has the SDRAM capacity column of four bits[3:0] and the bank address column of three bits[6:4]. The SPD data memory expansion unit 50 in FIG. 3 adds each SDRAM capacity in the SPD data of each memory modules, calculates the capacity of the extended memory and rewrites the SDRAM capacity column with the calculated capacity. Further, the SPD data memory expansion unit 50 does not change the width of the bank address.

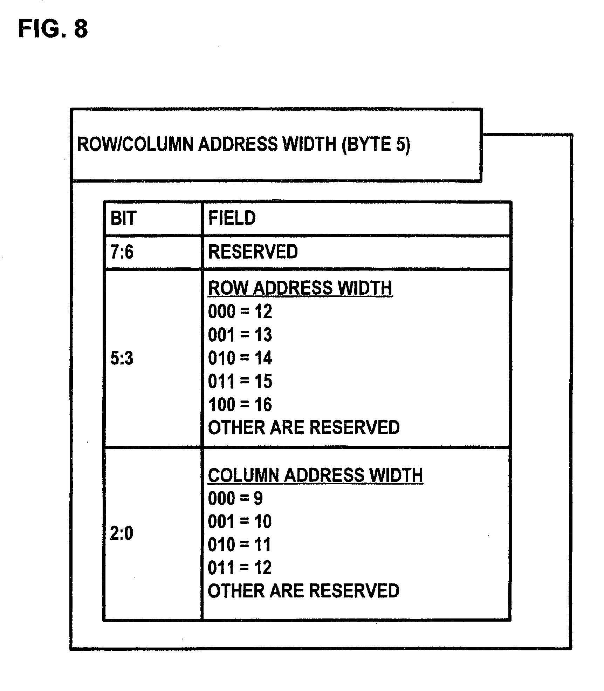

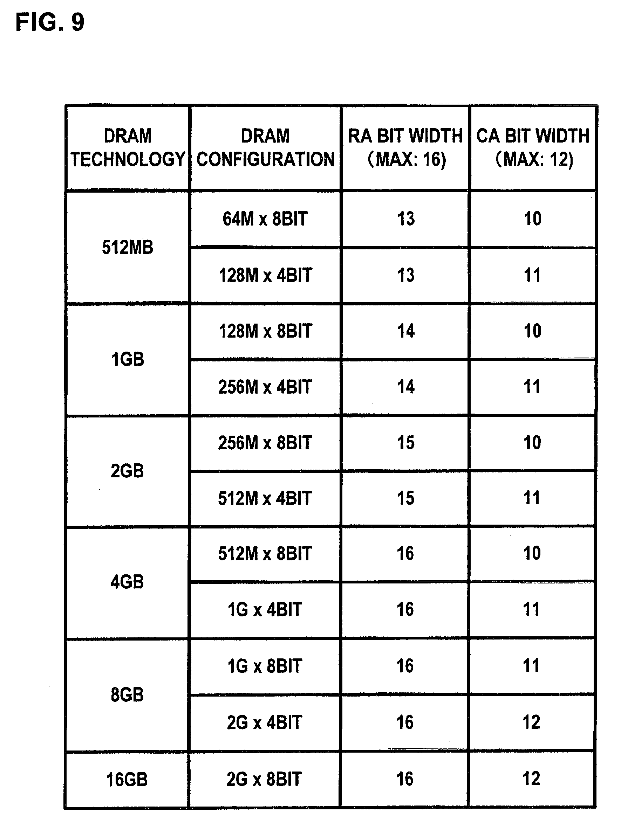

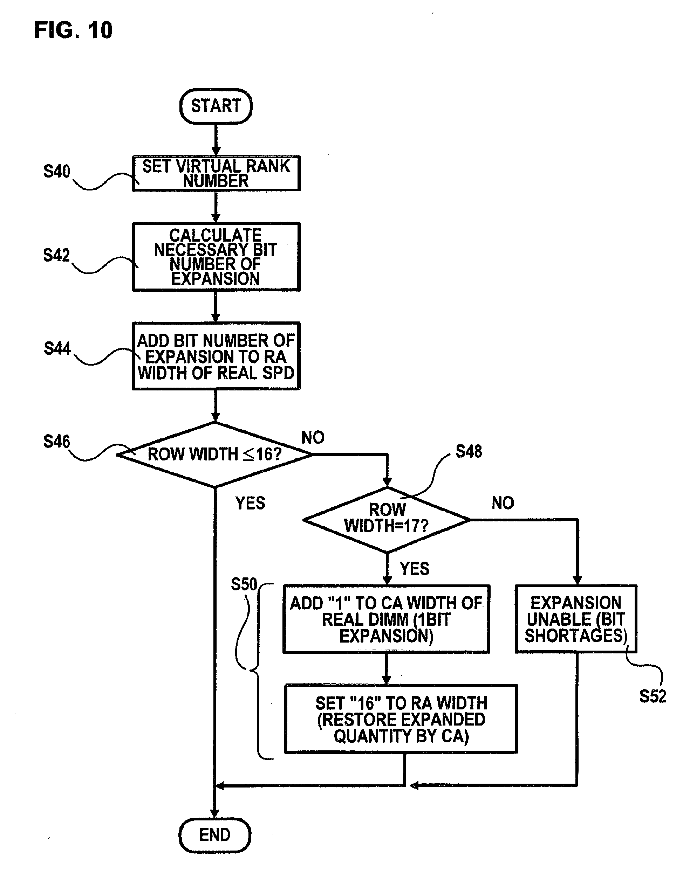

FIG. 8 is an explanatory diagram of the row/column address width in byte 5 in FIG.6. FIG. 9 is a diagram of the relationship between DRAM capacity and SPD settings. FIG. 10 is a flow diagram of conversion process of the row/column address width executed by the SPD data memory expansion unit 50. As indicated in FIG. 8, the row/column address width of byte 5 has a field of column address of three bits[2:0] and a field of row address of three bits[5:3].

As indicated by FIG. 9, the DRAM capacity (described as "DRAM technology" in FIG. 9) depicts six types of 512Mbit, 1Gbit, 2Gbit, 4Gbit, 8Gbit, 16Gbit. For capacity of each DRAM, the DRAM configuration is defined two types. Each of the DRAM configuration is a type of "*8-bit" and a type of "*4-bit".

Depending on each of DRAM capacity and the DRAM configuration, the row address bit width (RA) and the column address bit width (CA) are set. The row address bit width is up to 16 bits in maximum, and the column address bit width is up to 12 bits in maximum.

For example, 512Mbit capacity of DRAM uses 13 bits of the row address bit width and 1Gbit capacity of DRAM uses 14 bits of the row address bit width. Also, 2Gbit capacity of DRAM uses 15 bits of the row address bit width, and each of 4G bits, 8Gbits and 16Gbits capacity of DRAM use 16 bits row address bit width.

In addition, the *8-bit construction DRAM of which the capacity is 512Mbit, 1Gbit, 2Gbit, 4Gbit use 10 bits of the column address bit width. The *4-bit construction DRAM of which the capacity is 512Mbit, 1Gbit, 2Gbit, 4Gbit use 10 bits of the column address bit width. The *8-bit DRAM configuration of which the capacity is 8Gbit uses 11 bits of the column address bit width. The *4-bit construction DRAM of which the capacity is 8Gbit and the 16Gbit capacity DRAM uses 12 bits of the column address bit width.

Expansion processing of RA / CA bit by the SPD data memory expansion and conversion unit 50 will be explained by using FIG.10.
(S40) The SPD data memory expansion and conversion unit 50 sets the number of virtual rank (Rank). The number of virtual rank indicates the number of virtual rank of the riser board, and is normally smaller than the number of actual ranks.
(S42) The SPD data memory expansion and conversion unit 50 calculates the number of bits required extension from the difference between the number of virtual ranks and the total number of real ranks. For example, when the number of the virtual ranks =2 and the total number of the real ranks =8, the number of bits required extension is 2 bits (= 3 - 1) from the number of the virtual ranks =2 (=a power of 2 (information content=1bit) and the total number of the actual ranks =8 (a cube of 2 (information contents = 3bit).
(S44) The SPD data memory expansion and conversion unit 50 adds the number of bits required extension to the row address width (RA) of the actual SPD data in byte 5 in FIG. 6.
(S46) The SPD data memory expansion and conversion unit 50 determines whether or not the row address width which is calculated is equal or less than 16 bits which is the maximum width of the row address. Then, when the SPD data memory expansion and conversion unit 50 determines that the row address width which is calculated is equal or less than 16 bits which is the maximum width, the SPD data memory expansion and conversion unit 50 rewrites corresponding fields of the SPD readout register 46 by the row address width which is calculated and exit the processing.
(S48) On the other hand, when the SPD data memory expansion and conversion unit 50 determines that the row address width which is calculated is not equal or less than 16 bits which is the maximum width, that is, when the row address which is calculated is beyond 16 bits which is maximum width, the SPD data memory expansion and conversion unit 50 determines whether or not the row address width which is calculated is 17 bits.
(S50) When the SPD data memory expansion and conversion unit 50 determines that the row address width which was calculated is 17 bits, the SPD data memory expansion and conversion unit 50 expands the width of column address. That is, the SPD data memory expansion and conversion unit 50 adds 1 bit to the width of column address (CA) of the actual SPD data in byte 5 of FIG. 6. And the SPD data memory extension and conversion unit 50 sets a maximum width "16" to the row address (RA) width. In other words, the minutes which extends the column address (CA) is restored to the row address. The SPD data memory expansion and conversion unit 50 rewrites the corresponding field (see FIG. 8) in the SPD readout register 46 to the width of row address and the width of the column address which were calculated and exits the processing.
(S52) On the other hand, when the SPD data memory expansion and conversion unit 50 determines that the width of row address which was calculated is not 17 bits, the SPD data memory expansion and conversion unit 50 determines that the extension is not possible, rewrites the corresponding field in the SPD readout register 46 to an error log, and exits the processing.

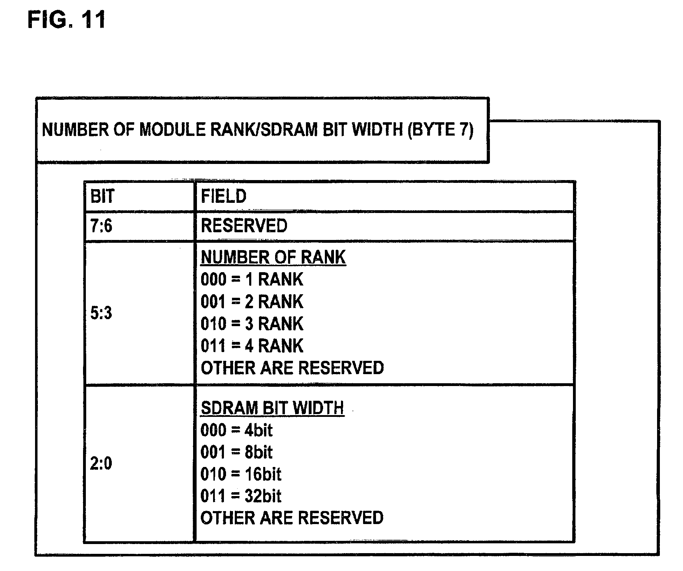

FIG. 11 is an explanatory diagram of a conversion process of the number of module rank/ the bit width of the SDRAM in byte 7 in FIG. 6. The number of module rank/ the bit width of the SDRAM has a three bit[2:0] field of bit width of the SDRAM and a three bit field[5:3] of the number of rank. The SPD data memory expansion and conversion unit 50 in FIG. 3 sets the number of virtual rank to the number of rank column to rewrite. Also, the bit width of the SDRAM is not changed.

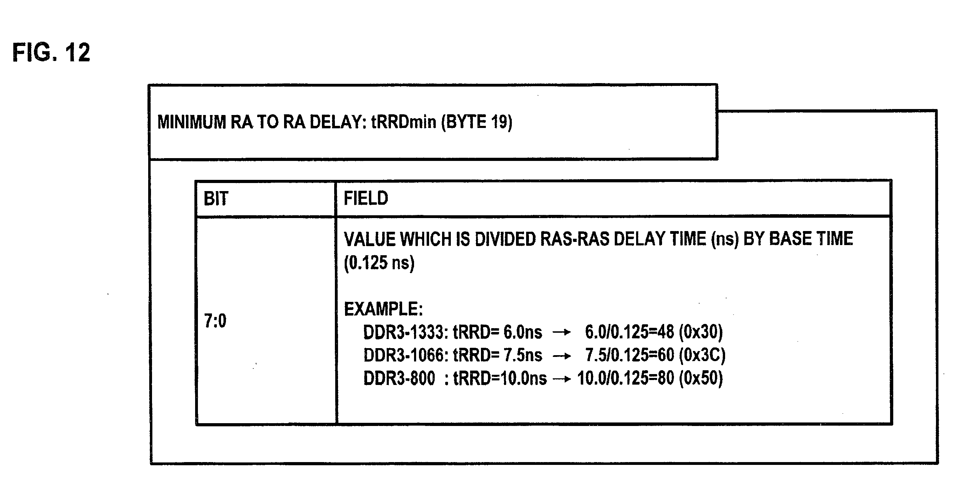

FIG. 12 is an explanatory diagram of a conversion process of the minimum RAS to RAS delay time (tRRDmin) in 19 byte in FIG. 6. In the minimum RAS to RAS delay time (tRRDmin) in 19 byte, the value in which the RAS-RAS delay time (ns) is divided by a base time (= 0.125ns) is stored as field. The SPD data memory extension and conversion unit 50 of FIG. 3, adds the latency time of the buffer memory chip (see FIG. 1 and FIG. 2) to the value of the field.

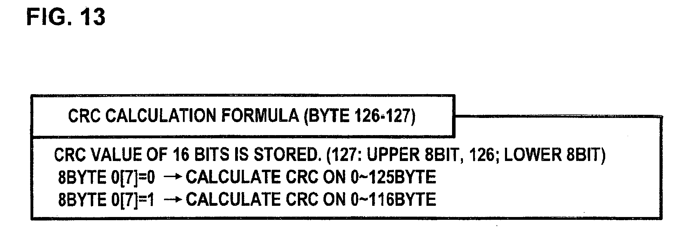

FIG. 13 is an explanatory diagram of a re-calculation process of the CRC code of the SPD in bytes 126-127 in FIG. 6. The CRC code of the SPD in bytes 126-127 has CRC value of 16 bits. Here, among the 16-bit CRC value, the byte 126 holds upper 8 bits and the byte 127 holds the lower 8 bits.

As described in FIG. 6, the CRC code of the SPD data is first CRC value of the 0∼116 byte in the SPD data or second CRC value of the 0 ∼125 byte in the SPD data. Either of which is first or second CRC value are specified in the seventh bit[7] of the byte 0 in FIG. 6.

In the example, the SPD data memory expansion and conversion unit 50 recalculates the CRC up to 0-116 bytes of the SPD data (after expansion and conversion) in FIG. 5 and FIG. 6, and writes the calculated CRC to the field in the byte 126 and 127, when the byte 0[7] (seventh bit of byte 0 in FIG.6) = 1. In addition, the SPD data memory expansion and conversion unit 50 recalculates the CRC up to 0-125 bytes of the SPD data (after expansion and conversion) in FIG. 5 and FIG. 6, and writes the calculated CRC to the field in the byte 126 and 127, when the byte 0[7] (seventh bit of byte 0 in FIG. 6) = 0. Then the SPD data expansion and conversion unit 50 rewrites the corresponding fields of the SPC readout register 46 (see FIG. 5 and FIG. 6) by the calculated CRC value and exits the processing.

As described above, the SPD readout register 46 holds the SPD data with the fields of 0 -255 bytes as indicated by FIG. 5 and FIG. 6, and the SPD data checking unit 46 and the SPD data memory expansion and conversion unit 50 rewrites the SPD readout register 46 by the value which is detected match, adjusted the timing and performed the extended conversion. Since the SPD data in the SPD readout register 46 is written in the SPD virtual storage unit 56, the SPD virtual storage unit 56 stores the SPD data having fields of 0-255 bytes which is detected match, adjusted the timing and performed the extended conversion.

Therefore, the BIOS can performs memory recognition process of the SPD data of the memory modules 10-0 ∼ 10-3 in the riser board 1-0 (1-1 to 1-8) by once reading. Therefore, it is possible to reduce the load of the BIOS for the recognition process of the memory. In other words, it is possible to reduce the initialization time of the BIOS.

### (Other embodiments of the memory system)

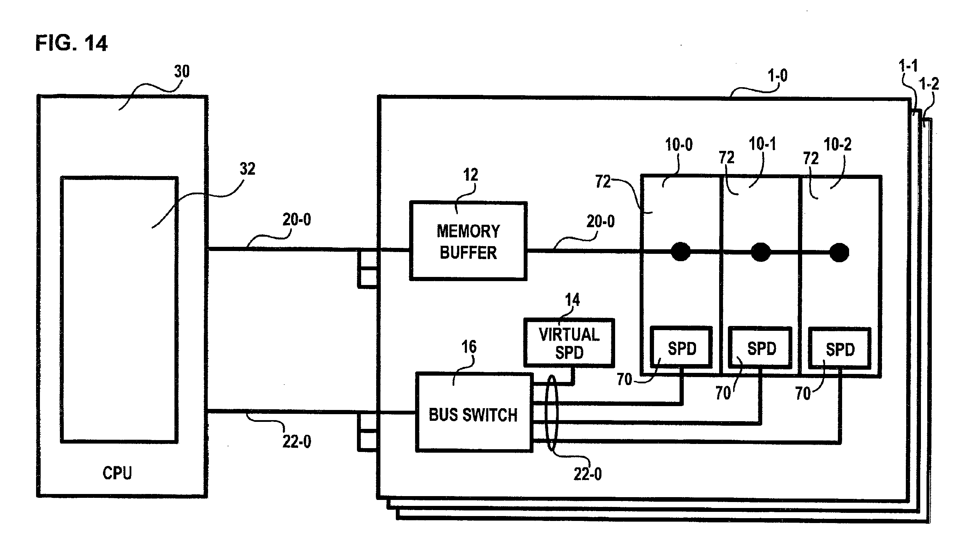

FIG. 14 is a block diagram of a memory system according to a second embodiment. In FIG. 14, elements which are the same as elements illustrated in FIG. 2 are indicated by the same symbols. As depicted by FIG. 14, the memory controller 32 in the CPU30 connects to a bus switch 16 via the serial bus 22-0. The bus switch 16 is connected to the virtual SPD memory 14 described in FIG. 3 and to the SPD memory 70 of the memory modules 10-0 ∼ 10-2 via the serial bus 22-0.

That is, the bus switch 16 is provided to each of riser board 1-0 ∼1-2, the memory controller 32 accesses the virtual SPD memory 14 by switching the bus switch 16 according to an address of the memory controller 32. In addition, the memory controller 32 can also access the SPD memory 70 in the memory modules 10-0 ∼ 10-2.

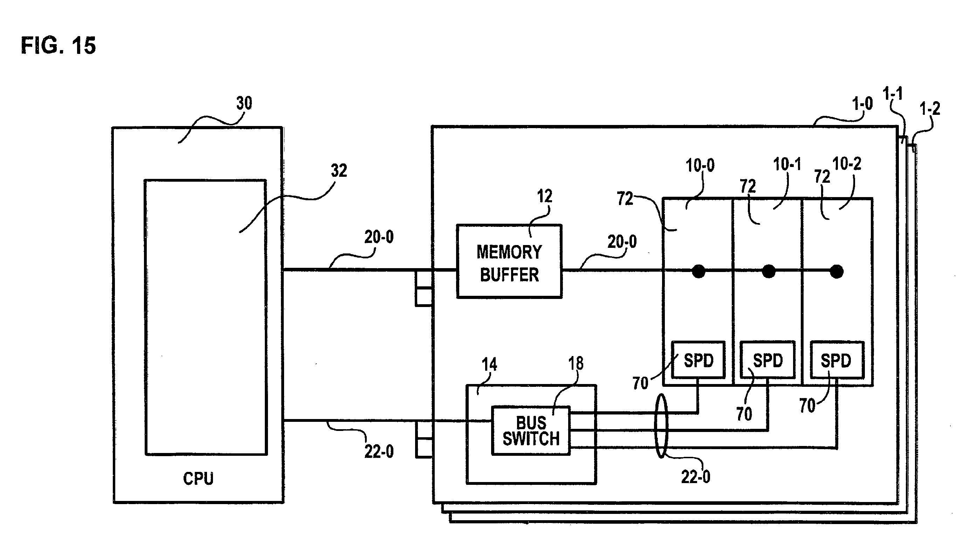

FIG. 15 is a block diagram of a memory system according to a third embodiment. In FIG. 15, elements which are the same as elements illustrated in FIG. 2 and FIG. 14 are indicated by the same symbols. As depicted by FIG. 15, the memory controller 32 in the CPU30 connects to the virtual SPD memory 14 via the serial bus 22-0. The virtual SPD memory 14 has a bus switch 18. The bus switch 18 connects to the SPD memory 70 in the memory modules 10-0 ∼ 10-2.

The bus switch 18 is provided in the virtual SPD memory 14 of the riser board 1-0 ∼ 1-2, the memory controller 32 can access the SPD memory in the memory module 10-0 ∼ 10-2 by switching the bus switch 18 according to an address from the memory controller 32.

The configuration examples in FIG. 14 and FIG. 15 is effective when referring to the SPD data in the SPD memory 70 of the memory modules 10-0 ∼10-2 by some reason (for example, detecting of memory access errors).

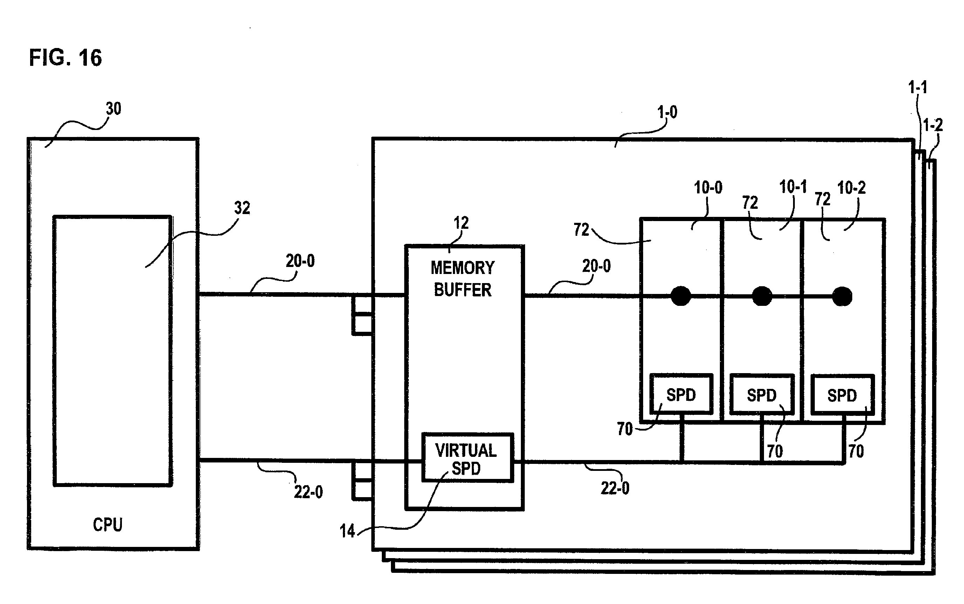

FIG.16 is a block diagram of a memory system according to a fourth embodiment. In FIG. 16, elements which are the same as elements illustrated in FIG. 2 are indicated by the same symbols. As depicted by FIG. 16, the buffer memory chip 12 incorporates the virtual SPD memory 14. The memory controller 32 in the CPU 30 connects to the virtual SPD memory 14 in the buffer memory chip 12 via the serial bus 22-0. The virtual SPD memory 14 connects to the SPD memory 70 of the memory modules 10-0 ∼ 10-2 through the serial bus 70.

By integrating the virtual SPD memory 14 in the memory buffer chip 12, it is possible to reduce the LSI (Large Scaled Integrated) chip in the riser board.

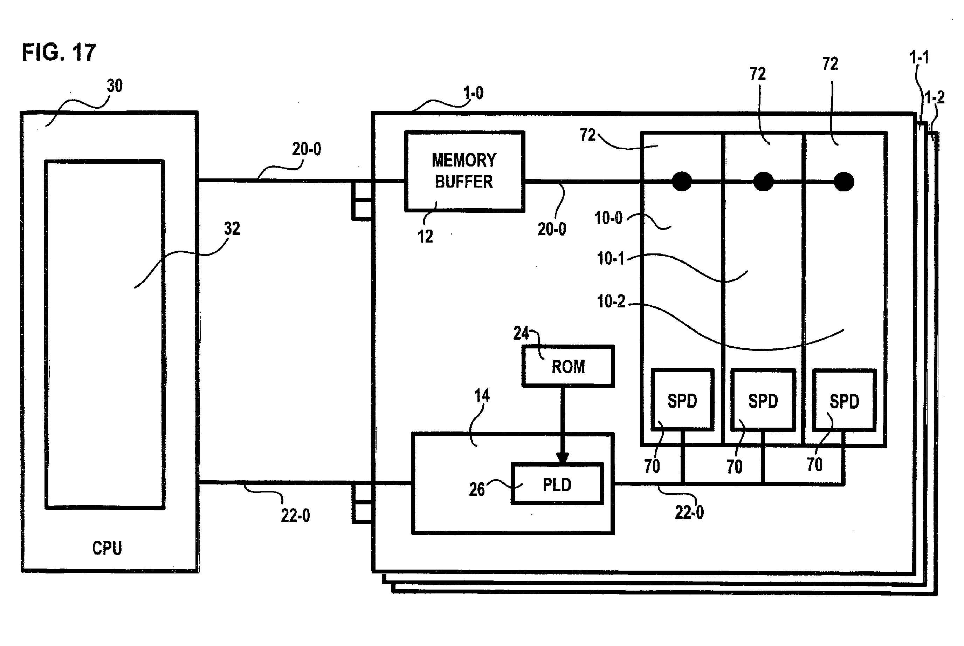

FIG. 17 is a block diagram of a memory system according to a fifth embodiment. In FIG. 17, elements which are the same as elements illustrated in FIG. 2 are indicated by the same symbols. As depicted by FIG. 17, the memory controller 32 in the CPU 30 connects to the virtual SPD memory 14 via the serial bus 22-0. The virtual SPD memory 14 connects to the SPD memory 70 of the memory modules 10-0 ∼ 10-2 through the serial bus 70.

The virtual SPD memory 14 has a ROM (Read Only Memory) 24 that stores the logical data of check of the SPD data and of expansion and conversion of the SPD data and a PLD (Programable and a Logic Device) 26 that programmable-changes a check logic and a expansion and conversion logic according to the logical data in the RAM 24.

This configuration can programmable-changes a the SPD data check unit 48 and the SPD data expansion and conversion unit 50 as described in FIG. 2. In other words, it is possible to flexibly respond to change the specifications of the SPD.

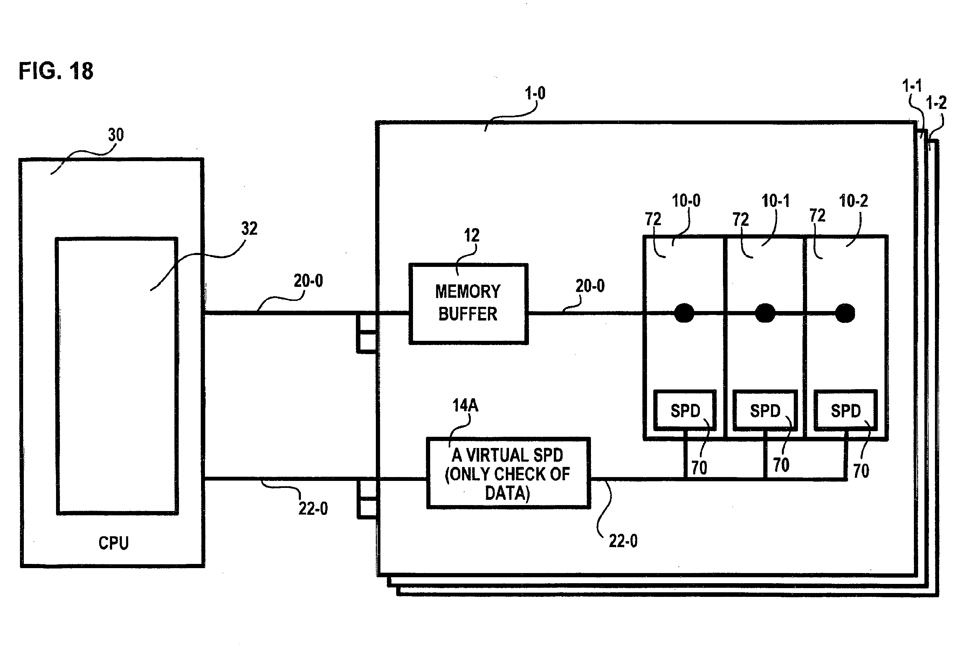

FIG. 18 is a block diagram of a memory system of a sixth embodiment. In FIG. 18, elements which are the same as elements illustrated in FIG. 2 are indicated by the same symbols. As depicted by FIG. 18, the memory controller 32 in the CPU 30 connects to a virtual SPD memory 14A via the serial bus 22-0. The virtual SPD memory 14A connects to the SPD memory 70 of the memory modules 10-0 ∼ 10-2 through the serial bus 70.

The virtual SPD memory 14A has a function of checking (detecting of match) of the SPD data and has not the functions of the common timing of the SPD data and of the expansion and conversion of the SPD data. An error log of the data check of the virtual SPD memory 14A is logged in the empty space of the storage section of the virtual SPD memory 14A. Then, the BIOS accesses the real SPD memory 70 in the memory modules 10-0 ∼ 10-2 as usual and performs memory initialization process.

According to this configuration, the virtual SPD memory 14A can be equipped to the riser 1-0 of other manufacturers without changing the riser 1-0 of the other manufacturers. In addition, since the virtual SPD memory 14A performs the data check of the SPD data instead of the BIOS, it is possible to reduce the load of the BIOS.

In the above embodiment, memory circuit has been described in the DIMM, but it may be applied memory module circuits of other configurations. Also the memory bus has been described in the example of DDR 3 in the time-division address and command transmission scheme, but the memory bus can be applied the other time-division address and command transmission scheme such as DDR or DDR2. In addition, the control bus has been described the I2C bus, the control bus can be applied to other forms of control bus.

### INDUSTRIAL APPLICABILITY

Since the bus memory interface circuit, which collects specific information for the plurality of memory circuits, creates a common specification information and stores the information, is connected to the control bus of the processing unit, it is possible to increase the connection number of memory of the memory bus. Also, it is possible to shorten the initialization process of the processing unit even though increasing the memory to the memory bus.

## Claims

1. A memory device comprises:
a plurality of memory circuits (10-0 ∼ 10-3), each of the plurality of memory circuits (10-0 ∼ 10-3) having a volatile memory (72) and a nonvolatile memory (70) that stores a specification information of data input and output of the volatile memory (72); and
a memory interface circuit (14) that is connected to a processing device (30), that performs data input and output control of the volatile memory (72) via a memory bus (20-0), via a control bus (22-0) and is connected to the nonvolatile memory (70) via the control bus (22-0), **characterized in that** the memory interface circuit (14) comprises:
a processing circuit (42, 48, 50, 52) that reads the specification information in the nonvolatile memory (70) of the plurality of memory circuits (10-0 ∼ 10-3) via the control bus (22-0) and determines whether or not at least the plurality of memory circuits (10-0 ∼ 10-3) meet requirements for memory expansion from the specification information of the plurality of memory circuits (10-0 ∼ 10-3) which were read; and
a storage unit (56) that is connected to the processing unit (30) via the control bus (22-0) and stores a determination result of the processing circuit (42, 48, 50, 52) for initialization process of the processing device (30).

2. The memory device according to claim 1, wherein the processing circuit (42, 48, 50, 52) creates a common specification information wherein the processing unit (30) performs the data input and output to and from the plurality of memory circuits (10-0 ∼ 10-3) from the specification information of each of the plurality of memory circuits (10-0 ∼ 10-3) which were read and stores the common specification into the storage unit (56).

3. The memory device according to claim 2, the processing circuit (42, 48, 50, 52) comprises:
a read control unit (42) that reads the specification information in the nonvolatile memory of each of the plurality of memory circuits (10-0 ∼ 10-3) and stores the specification information into a register (46) via the control bus (22-0);
a creation circuit (48, 50) that determines whether characteristics of the plurality of memory circuits (10-0 ∼ 10-3) match with each other from the specification information of each of the plurality of memory circuits (10-0 ∼ 10-3) in the register (46), and creates the common specification information whereby the processing unit (30) performs the data input and output to and from the plurality of memory circuits (10-0 ∼ 10-3); and
a write control unit (52) that writes created the common specification information into the storage unit (56).

4. The memory device according to claim 2, wherein the processing circuit (42, 48, 50, 52) determines whether operation speeds of the plurality of memory circuits (10-0 ∼ 10-3) match with each other from the specification information of the plurality of memory circuits (10-0 ∼ 10-3) and creates a common timing information of the plurality of memory circuits (10-0 ∼ 10-3).

5. The memory device according to claim 2, wherein the processing circuit (42, 48, 50, 52) creates a common width of address bits for expansion of the memory from the specification information of the plurality of memory circuits (10-0 ∼ 10-3).

6. The memory device according to claim 1, wherein the memory device further comprises a power detecting unit (40) that detects a power-on of the memory device, and
wherein the processing circuit (42, 48, 50, 52) starts reading of the specification information in accordance with a detection of the power-on by the power detecting unit (40).

7. The memory device according to claim 1, wherein the memory interface circuit (14) further comprises a buffer memory (12) that is connected to the memory bus (20-0) and is connected to volatile memory (72) in the plurality of memory circuits (10-0 ~ 10-3).

8. The memory device according to claim 1, wherein the plurality of memory circuits (10-0 ~ 10-3) are connected to the processing unit (30) via the memory bus (20-0).

9. Memory system comprises:
a memory device (1-0 ~ 1-8) according to any of the claims 1 to 8; and:
the processing unit (30) that has a memory controller (32) that controls the data input and output of the volatile memory (72) via a memory bus (20-0),
and wherein the processing unit (30) reads stored information in the storage unit (56) via the control bus (22-0) and performs initialization process of the memory controller (32).

## Patentansprüche

1. Eine Speichervorrichtung umfassend:
eine Vielzahl von Speicherschaltkreisen (10-0∼10-3), wobei jede der Vielzahl von Speicherschaltkreisen (10-0∼10-3) einen flüchtigen Speicher (72) und einen nicht flüchtigen Speicher (70), welcher eine Spezifikationsinformation von in den flüchtigen Speicher (72) eingegebenen und von ihm ausgegebenen Daten speichert, aufweist; und
einen Speicherschnittstellenschaltkreis (14), welcher mit einer Bearbeitungsvorrichtung (30) verbunden ist, welche eine Dateneingabe- und Ausgabesteuerung des flüchtigen Speichers (72) über einen Speicherbus (20-0), über einen Steuerbus (22-0) ausführt und mit dem nicht flüchtigen Speicher (70) über den Steuerbus (22-0) verbunden ist, **dadurch gekennzeichnet, dass** der Speicherschnittstellenschaltkreis (14) umfasst:
einen Verarbeitungsschaltkreis (42,48, 50,52), welcher die Spezifikationsinformation in dem nicht flüchtigen Speicher (70) der Vielzahl von Speicherschaltkreisen (10-0-10-3) über den Steuerbus (22-0) ausliest und aus der Spezifikationsinformation der Vielzahl von Speicherschaltkreisen (10-0∼10-3), welche ausgelesen wurden, bestimmt, ob zumindest die Vielzahl von Speicherschaltkreisen (10-0∼10-3) Voraussetzungen für eine Speichererweiterung erfüllen oder nicht; und
eine Speichereinheit (56), welche mit der Verarbeitungseinheit (30) über den Steuerbus (22-0) verbunden ist und ein Bestimmungsergebnis des Verarbeitungsschaltkreises (42,48, 50,52) für einen Einleitungsprozess der Verarbeitungsvorrichtung (30) speichert.

2. Die Speichervorrichtung gemäß Anspruch 1, wobei der Verarbeitungsschaltkreis (42, 48, 50, 52) eine gemeinsame Spezifikationsinformation erzeugt, wobei die Verarbeitungseinheit (30) die Dateneingabe- und Ausgabe an und von der Vielzahl von Speicherschaltkreisen (10-0∼10-3), welche ausgelesen wurden, ausführt und die gemeinsame Spezifikation auf der Speichereinheit (56) speichert.

3. Die Speichervorrichtung gemäß Anspruch 2, wobei der Verarbeitungsschaltkreis (42, 48, 50, 52) umfasst:
eine Auslesesteuereinheit (42), welche die Spezifikationsinformation in dem nicht flüchtigen Speicher einer jeden der Vielzahl von Speicherschaltkreisen (10-0-10-3) ausliest und die Spezifikationsinformation in einem Register (46) über den Steuerbus (22-0) speichert;
einen Erzeugungsschaltkreis (48, 50), welcher aus der Spezifikationsinformation einer jeden der Vielzahl von Speicherschaltkreisen(10-0-10-3) in dem Register (46) bestimmt, ob Eigenschaften der Vielzahl von Speicherschaltkreisen (10-0∼10-3) miteinander übereinstimmen, und die gemeinsame Spezifikationsinformation erzeugt, wodurch die Verarbeitungseinheit (30) die Dateneingabe- und Ausgabe an und von der Vielzahl von Speicherschaltkreisen (10-0-10-3) ausführt; und
eine Schreibsteuereinheit (52), welche die erzeugte gemeinsame Spezifikationsinformation auf die Speichereinheit (56) schreibt.

4. Die Speichervorrichtung gemäß Anspruch 2, wobei der Verarbeitungsschaltkreis (42, 48, 50, 52) aus der Spezifikationsinformation der Vielzahl von Speicherschaltkreisen (10-0∼10-3) bestimmt, ob eine Betriebsgeschwindigkeit der Vielzahl von Speicherschaltkreisen (10-0∼10-3) miteinander übereinstimmt, und eine gemeinsame Taktungsinformation der Vielzahl von Speicherschaltkreisen (10-0∼10-3) erzeugt.

5. Die Speichervorrichtung gemäß Anspruch 2, wobei der Verarbeitungsschaltkreis (42, 48, 50, 52) eine gemeinsame Breite von Adressbits zum Erweitern des Speichers aus der Spezifikationsinformation der Vielzahl von Speicherschaltkreisen (10-0∼10-3) erzeugt.

6. Die Speichervorrichtung gemäß Anspruch 1, wobei die Speichervorrichtung weiterhin eine Energieerkennungseinheit (40) umfasst, welche ein Einschalten der Speichervorrichtung erkennt, und
wobei der Verarbeitungsschaltkreis (42,48, 50,52) mit dem Auslesen der Spezifikationsinformation entsprechend einer Erkennung des Einschaltens durch die Energieerkennungseinheit (40) beginnt.

7. Die Speichervorrichtung gemäß Anspruch 1, wobei der Speicherschnittstellenschaltkreis (14) weiterhin einen Pufferspeicher (12) umfasst, welcher mit dem Speicherbus (20-0) verbunden ist und mit dem flüchtigen Speicher (72) in der Vielzahl von Speicherschaltkreisen (10-0∼10-3) verbunden ist.

8. Die Speichervorrichtung gemäß Anspruch 1, wobei die Vielzahl von Speicherschaltkreisen (10-0∼10-3) mit der Verarbeitungseinheit (30) über den Speicherbus (20-0) verbunden sind.

9. Ein Speichersystem umfassend:
eine Speichervorrichtung (1-0∼1-8) entsprechend einem der Ansprüche 1 bis 8; und:
die Verarbeitungseinheit (30), welche eine Speichersteuereinheit (32) aufweist, welche die Dateneingabe- und Ausgabe des flüchtigen Speichers (72) über einen Speicherbus (20-0) steuert,
und wobei die Verarbeitungseinheit (30) auf der Speichereinheit (56) gespeicherte Informationen über den Steuerbus (22-0) ausliest und einen Einleitungsprozess der Speichersteuereinheit (32) ausführt.

## Revendications

1. Dispositif de mémoire comportant :
une pluralité de circuits de mémoire (10-0 - 10-3), chacun de la pluralité de circuits de mémoire (10-0 - 10-3) possédant une mémoire volatile (72) et une mémoire non volatile (70) qui mémorise une information de spécification d'entrée et de sortie de données de la mémoire volatile (72); et
un circuit d'interface de mémoire (14) qui est relié à un dispositif de traitement (30), qui effectue un contrôle d'entrée et de sortie de données de la mémoire volatile (72) par l'intermédiaire d'un bus de mémoire (20-0), par l'intermédiaire d'un bus de contrôle (22-0) et est relié à la mémoire non volatile (70) par l'intermédiaire du bus de contrôle (22-0), **caractérisé en ce que** le circuit d'interface de mémoire (14) comporte :
un circuit de traitement (42, 48, 50, 52) qui lit l'information de spécification dans la mémoire non volatile (70) de la pluralité de circuits de mémoire (10-0 - 10-3) par l'intermédiaire du bus de contrôle (22-0) et détermine si oui ou non au moins la pluralité de circuits de mémoire (10-0 - 10-3) remplit les exigences pour une extension de mémoire à partir de l'information de spécification de la pluralité de circuits de mémoire (10-0 - 10-3) qui ont été lus ; et
une unité de stockage (56) qui est reliée à l'unité de traitement (30) par l'intermédiaire du bus de contrôle (22-0) et mémorise un résultat de détermination du circuit de traitement (42, 48, 50, 52) pour un processus d'initialisation du dispositif de traitement (30).

2. Dispositif de mémoire selon la revendication 1, dans lequel le circuit de traitement (42, 48, 50, 52) crée une information de spécification commune dans laquelle l'unité de traitement (30) effectue l'entrée et la sortie de données vers et depuis la pluralité de circuits de mémoire (10-0 - 10-3) à partir de l'information de spécification de chacun de la pluralité de circuits de mémoire (10-0 - 10-3) qui ont été lus et mémorise la spécification commune dans l'unité de stockage (56).

3. Dispositif de mémoire selon la revendication 2, le circuit de traitement (42, 48, 50, 52) comportant :
une unité de contrôle de lecture (42) qui lit l'information de spécification dans la mémoire non volatile de chacun de la pluralité de circuits de mémoire (10-0 - 10-3) et mémorise l'information de spécification dans un registre (46) par l'intermédiaire du bus de contrôle (22-0);
un circuit de création (48, 50) qui détermine si les caractéristiques de la pluralité de circuits de mémoire (10-0 - 10-3) correspondent les unes avec les autres à partir de l'information de spécification de chacun de la pluralité de circuits de mémoire (10-0 - 10-3) dans le registre (46), et crée l'information de spécification commune moyennant quoi l'unité de traitement (30) effectue l'entrée et la sortie de données vers et depuis la pluralité de circuits de mémoire (10-0 - 10-3) ; et
une unité de contrôle d'écriture (52) qui écrit l'information de spécification commune créée dans l'unité de stockage (56).

4. Dispositif de mémoire selon la revendication 2, dans lequel le circuit de traitement (42, 48, 50, 52) détermine si les vitesses de fonctionnement de la pluralité de circuits de mémoire (10-0 - 10-3) correspondent les unes aux autres à partir de l'information de spécification dans la pluralité de circuits de mémoire (10-0 - 10-3) et crée une information de synchronisation commune de la pluralité de circuits de mémoire (10-0 - 10-3).

5. Dispositif de mémoire selon la revendication 2, dans lequel le circuit de traitement (42, 48, 50, 52) crée une largeur commune de bits d'adresse pour une extension de la mémoire à partir de l'information de spécification de la pluralité de circuits de mémoire (10-0 - 10-3).

6. Dispositif de mémoire selon la revendication 1, dans lequel le dispositif de mémoire comporte en outre une unité de détection de puissance (40) qui détecte une mise en marche du dispositif de mémoire, et
dans lequel le circuit de traitement (42, 48, 50, 52) commence la lecture de l'information de spécification conformément à une détection de la mise en marche par l'unité de détection de puissance (40).

7. Dispositif de mémoire selon la revendication 1, dans lequel le circuit d'interface de mémoire (14) comporte en outre une mémoire tampon (12) qui est reliée au bus de mémoire (20-0) et est reliée à la mémoire volatile (72) dans la pluralité de circuits de mémoire (10-0 - 10-3).

8. Dispositif de mémoire selon la revendication 1, dans lequel la pluralité de circuits de mémoire (10-0 - 10-3) sont reliés à l'unité de traitement (30) par l'intermédiaire du bus de mémoire (20-0).

9. Système de mémoire comportant :
un dispositif de mémoire (1-0 - 1-8) selon l'une quelconque des revendications 1 à 8 ; et
l'unité de traitement (30) qui possède un contrôleur de mémoire (32) qui contrôle l'entrée et la sortie de données de la mémoire volatile (72) par l'intermédiaire d'un bus de mémoire (20-0),
et dans lequel l'unité de traitement (30) lit l'information mémorisée dans l'unité de stockage (56) par l'intermédiaire du bus de contrôle (22-0) et effectue un processus d'initialisation du contrôleur de mémoire (32).
